# EUROPEAN PATENT APPLICATION

(11) **EP 3 906 825 A1**
(43) Date of publication of application: **10.11.2021**
(21) Application number: 19907036.8
(22) Date of filing: 30.12.2019
(51) Int. Cl.: A47J 47/00, B26D 7/02

(54) **HAM CARVING STAND FOR HAM AND BONELESS MEATS**

(30) Priority: 02.01.2019 ES 201930001
(71) Applicant: Rodriguez Herrero, Juan Francisco, 37000 Salamancaes (ES); Ramos-Valcarce Morcillo, Miguel Angel, 37007 Salamanca (ES)
(72) Inventor: Rodriguez Herrero, Juan Francisco, 37000 Salamancaes (ES); Ramos-Valcarce Morcillo, Miguel Angel, 37007 Salamanca (ES)
(74) Representative: Lorente Berges, Ana
(86) International application number: PCT/ES2019/000075
(87) International publication number: WO 2020/141234

(57) **Abstract**

The present invention relates to a new device that holds a portion of ham securely, before deboning, and provides a guide for the knife to enable an inexperienced person to carve thin slices by hand. The invention can also be used for carving other meat products into slices, for example cecina (cured dried meat).

## Description

Holding and guiding device for cutting a portion of ham by hand and for cutting slices or fillets of other similar products.

### OBJECT OF THE INVENTION

The object of the present invention is a novel device that firmly holds a previously boned portion of ham and provides a guide for the knife so that a non-expert can cut thin slices by hand. The invention can also be used for slicing other meat products, such as jerky (cecina).

### BACKGROUND OF THE INVENTION

Currently, to cut an Iberian ham or pork butt by hand, a device generally known as a "ham holder" is normally used. This device generally requires the entire piece of ham arranged on it, forcing the non-expert user to handle a product that, by their morphology, their characteristics (especially fat), and weight, entails difficulties for easily filleting or slicing the ham (ham cut by hand).

There are several types of ham holders, although the most widespread ham holder consists of a structure normally made of wood that comprises a base at the ends of which there is a rear fixing element and a front fixing element. The rear fixing element is arranged on a post fixed to the base and consists mainly of a ring crossed by screws to fix the end of the ham or pork butt where the hoof is located. The front fixing element is directly connected to the base at the opposite end and consists mainly of a screw for fixing the thick end of the ham or pork butt.

There are other types of ham holders with relatively different configurations from those described, although they all only immobilize the ham or pork butt in a fixed position. That is to say, the current ham holders do not provide any help to the person who cuts the ham beyond holding the ham or pork butt piece. Therefore, to make an adequate cut, whoever cuts must control the thickness and dimensions of each slice by hand. As a consequence, to get a well-cut ham or pork butt, it is currently essential that the person who cuts the ham is an expert in cutting hams or pork butts. In addition, traditional ham holders are not designed to cut the ham by hand from the boneless product as a whole piece of ham is required for cutting, that is, on the product previously divided into pieces or portions. There are, therefore, no effective devices that facilitate hand cutting a boneless ham; that is, applying the cut by hand on portions or pieces of ham (previously deboned) to obtain thin slices of ham from such portions.

In view of this situation, there is a need in this field for a ham holder that, in addition to holding the ham or pork butt efficiently for cutting, facilitates cutting by hand into thin slices extracted from a portion or piece, previously boned, helping the person who cuts it.

### DESCRIPTION OF THE INVENTION

The present invention solves the above problems thanks to a new ham holder design that not only holds a portion of the ham, but also provides guides for cutting each slice, so that the cutting of a ham or pork butt is made accessible to non-expert people. This device is suitable, above all, for holding pieces of boneless ham.

The clamping and guide device for cutting ham of the present invention basically comprises the following elements: a pair of vertical plates to hold the piece of ham; a means for tightening said plates; a horizontal platform to support the piece of ham; and a means of rotating a rod mechanically connected to the horizontal platform to allow its elevation. Each of these items is described in more detail below:

### a) Vertical plates

It is a pair of parallel vertical plates slidingly connected through horizontal guides, so that they can move horizontally to get closer to or away from each other. As described in greater detail later in this document, this allows a piece of ham to be clamped between those plates due to the compression force. Furthermore, said first and second plates comprise a straight and smooth upper edge to allow the guiding of a knife. Therefore, when the piece of ham compressed between the two plates is arranged at a height such that a thin layer of ham protrudes above said upper edge, the user only has to horizontally move the knife guided by the upper edge of the plates themselves to cut a slice of ham.

The plates can be configured in a rigid or semi-rigid structure, both flat and in the form of a grid, mesh, or net.

### b) Clamping means

The clamping means is configured to push the second vertical plate against the first vertical plate to hold a piece of ham arranged between the two. This makes it possible to compress ham pieces of different sizes.

The clamping means can be configured in different ways. A spring-based mechanism is used having a first end fixed to a lever arm that rotates about a horizontal axis fixed to the first plate and a second end attached to the second plate according to a preferred embodiment of the present invention. In this way, in a close position of the clamping means where the lever arm has a closing orientation, the spring exerts a force tending to bring the first plate and the second plate closer together, compressing the piece of ham between them. Alternatively, in an opening position of the clamping means where the lever arm has an open orientation, the spring does not exert any force on the first plate or the second plate, allowing their separation.

In another preferred embodiment of the invention, the second end of the spring is fixed to the second plate through a rod threaded to said second plate that allows the spring to be tensioned and released. Therefore, when the aforementioned threaded rod is threaded or unscrewed, the extension distance of the spring changes and therefore the compression force that it applies on the first and second plates changes.

### c) Horizontal platform

The horizontal platform is arranged vertically movable between the first plate and second plate to provide lower support for the piece of ham so that it protrudes above the upper edge of the plates.

Specifically, this horizontal platform is connected to a vertically sliding frame that is engaged with a threaded vertical rod.

Preferably, the frame slides up and down along two vertical guides and is connected to the horizontal platform through horizontal arms that pass through vertical slots of the first vertical plate.

### d) Rotation means

It is a rotation means of the threaded vertical rod, so that the rotation of said threaded vertical rod causes the horizontal platform to rise, and the elevation of the piece of ham with it as the ham is cut.

In a preferred embodiment of the invention, the rod rotation means comprises an electrical mechanism that causes the automatic rotation of said threaded vertical rod when a button is actuated.

In another preferred embodiment, the rod rotation means further comprises a manual mechanism comprising a lever fixed to a ratchet-type mechanism. In this way, when the lever is operated in a certain direction, it meshes with a ratchet wheel of the threaded vertical rod in such a way that it causes the rotation of said threaded vertical rod in the direction that causes the horizontal platform to rise, which thus rises a short distance. The lever then returns to its original position when moving in the opposite direction, although in this case without engaging the ratchet wheel of the threaded vertical rod and, therefore, not causing the horizontal platform to go up or down.

In a particularly preferred embodiment of the invention, the device further comprises a distance limiting system that establishes a minimum approach distance between the first plate and the second plate. This makes it possible to adjust the device of the invention for pieces of ham of different thicknesses. Moreover, the distance limiting system comprises a rotatable arm provided with several parallel projections arranged at its free end that is fixed to the first plate and a rod projecting from the second plate. Thus, to adjust the distance between the first plate and the second plate, the rod is inserted into a gap between a certain pair of parallel projections on the arm.

Due to this configuration, this device greatly facilitates the task of cutting a piece of ham into thin slices. The user only has to place the piece of ham internally leaning on the horizontal platform arranged between the first plate and the second plate. Then the clamping means are actuated to bring the plates closer to each other and thus compressing the piece of ham between those plates, immobilizing it. Specifically, when using a clamping means of the type described above, the user only has to rotate the lever arm from its opening orientation to its closing orientation, thus increasing the distance between the two ends of the spring and, consequently, a force tending to move the plates against each other. When the piece of ham is firmly held between the plates and resting on the platform, the user acts on the automatic or manual rotation means of the vertical threaded rod to raise the horizontal platform until a thin layer of ham is protruding above the upper edge of the first and second plates. In this situation, the user can rest a knife on the upper edge of the plates and move it as it is guided to cut a first slice of ham. Afterwards, the user acts again on the automatic or manual rotation means of the threaded vertical rod to raise the horizontal platform again a small distance so that a new slice of ham protrudes above the edge of the plates, and then cuts the slice by resting the knife on the upper edge of the plates. These steps are repeated indefinitely until the entire piece is sliced, with a thickness of the slicing or filleting to suit the user, who can determine with the electric or manual operation, the part of the ham that protrudes from the edge of the plates to be cut.

The edge of the plates serves as a guide to the knife, allowing a homogeneous cut of the thickness of the ham slice. In this way, the device allows the ham to be cut by hand on a piece or portion of it, with full efficiency and without the need to require a whole piece of ham.

Once completely sliced, or at any other time that is necessary, for example, to change the orientation of the portion intended to be cut, the user can disengage the rotating means from the threaded rod to which the horizontal platform is connected. This allows the horizontal platform to be lowered or raised freely in a rapid manner to a desired position.

### BRIEF DESCRIPTION OF THE FIGURES

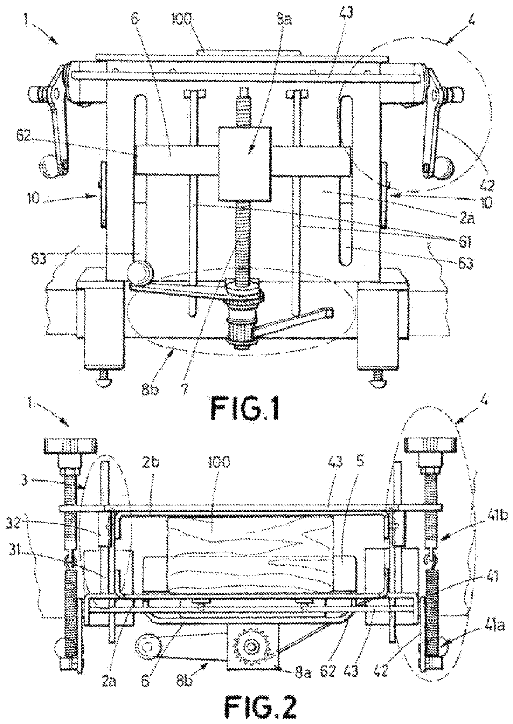

FIG. 1 shows an elevation view of the device of the present invention.
FIG. 2 shows a plan view of the device of the present invention.

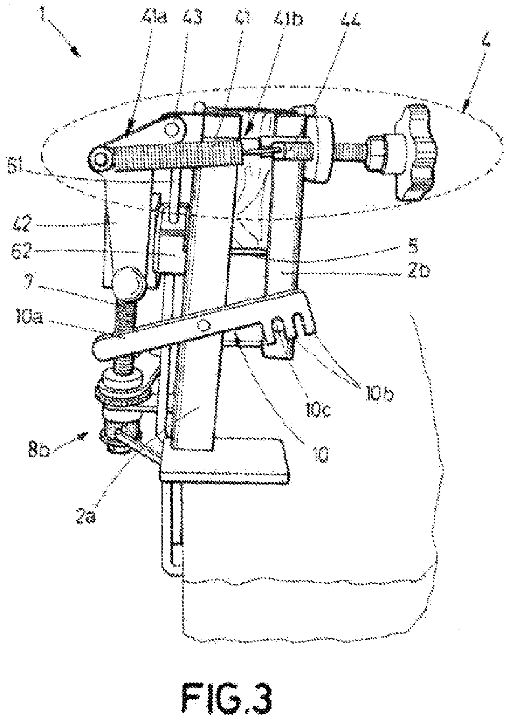

FIG. 3 shows a profile view of the device of the present invention.
FIG. 4 shows a perspective view of the device of the present invention with the lever arm in an open orientation.

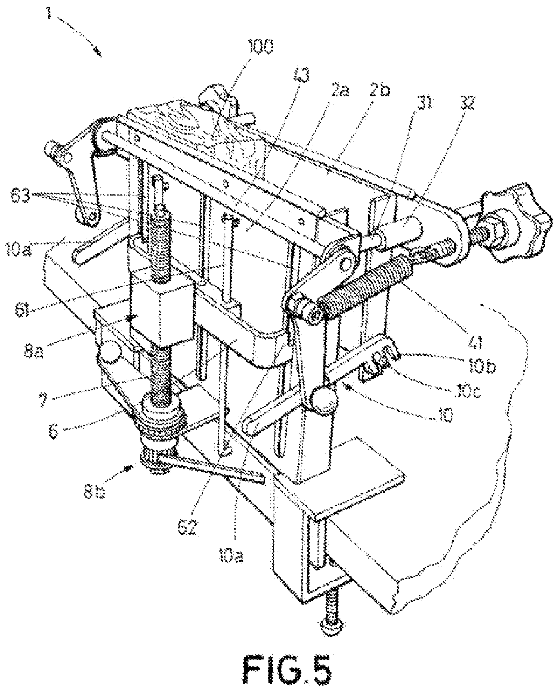

FIG. 5 shows a perspective view of the device of the present invention with the lever arm in a close orientation.

### PREFERRED EMBODIMENT OF THE INVENTION

An example of the device (1) according to the present invention is described below with reference to the attached figures.

The device (1) comprises a first vertical plate (2a) and a second vertical plate (2b) parallel to each other. These plates (2a, 2b) have respective lateral edges to prevent accidental release of the piece of ham (100). The plates (2a, 2b) are attached through a pair of horizontal guides (3) essentially formed by a horizontal pin (31) perpendicularly connected to the first plate (2a) and which is inserted in a cylindrical hole (32) perpendicularly connected to the second plate (2b). In this way, plates (2a, 2b) can move horizontally one perpendicular to the other so that they approach and move away.

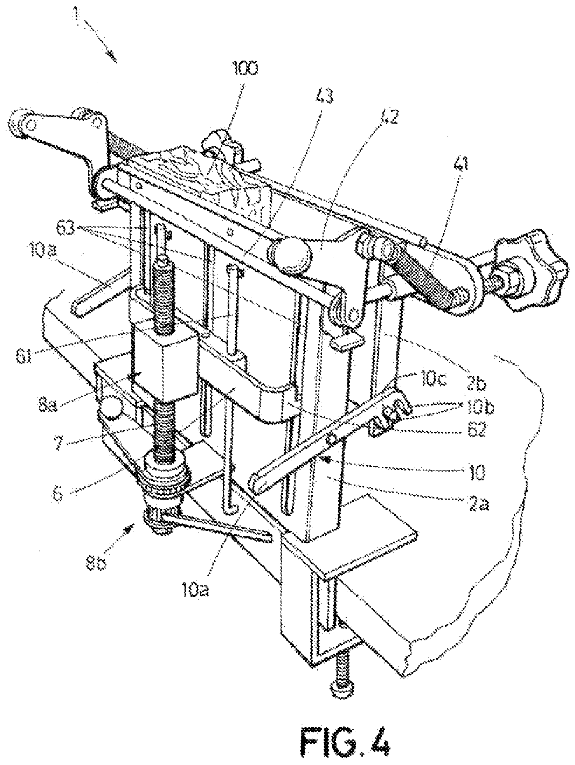

A clamping means (4) is configured to bring the plates (2a, 2b) closer to each other to hold the piece of ham (100) between them by compression. For this, the clamping means (4) is formed by a spring (41) having a first end (41a) and a second end (41b). The first end (41 a) is fixed to a movable part of a lever arm (42) that rotates around a horizontal axis (43) of the first plate (2a), so that said lever arm (42) can toggle between an open orientation and a close orientation. The second end (41b) is fixed to a projection of the second plate (2b). When the lever arm (42) is in the open orientation, as shown in Fig. 4a, the distance between the point to which the first end (41 a) of the spring (41) is attached and the projection of the second plate (2b) to which the second end (41 b) of the spring (41) is attached is minimal. In this situation, the spring (41) is not pulled relative to its rest configuration, and therefore does not exert substantially any force on the plates (2a, 2b). When the lever arm (42) moves to the closing orientation, as shown in Fig. 4a, an increase in the distance is caused between the point to which the first end (41 a) of the spring (41) is attached and the projection of the second plate (2b) to which the second end (41 b) of the spring (41) is attached. As a consequence, the spring (41) is pulled, and a contraction force is generated that tends to bring the plates (2a, 2b) closer to each other.

The device (1) also comprises a horizontal platform (5) on which the piece of ham (100) rests. This platform (5) is connected to a frame (6) through three horizontal arms (62) that pass through respective vertical slots (63) made in the first vertical plate (2a). The frame (6), in turn, is vertically sliding along a pair of vertical guides (61) rigidly fixed to said first plate (2a). Furthermore, the frame (6) is engaged to a rotatable vertical threaded rod (7) fixed to the first plate (2a).

The rotation of the threaded rod (7) in a controlled manner to thereby transmit a corresponding vertical displacement to the horizontal platform (5) is performed using one of an automatic rotation means (8a) and a manual rotation means (8b).

The automatic rotation means (8a) may comprise an electric motor that drives a toothed wheel that meshes with the vertical threaded rod (7). In this way, when the user presses a button of the automatic rotation means (8a), the motor is activated a certain number of turns that causes a small rotation of the rod (7) and, consequently, a certain rising distance of the horizontal platform (5).

The manual rotation means (8b) comprises a lever fixed to a ratchet mechanism, so that when the lever is actuated in a certain direction it meshes with a ratchet wheel of the threaded vertical rod (7) in such a way as to cause the rotation of said threaded vertical rod (7) in a direction that causes the horizontal platform (5) to rise a small distance. The lever then returns to its original position when moving in the opposite direction, for example, thanks to the action of a spring, although in this case without engaging the ratchet wheel of the threaded vertical rod (7) and, therefore, without causing the horizontal platform (5) to rise or descent. Each complete stroke of the lever corresponds to a certain rising distance of the horizontal platform (5).

Thanks to this configuration, when the threaded rod (7) is rotated, either by the automatic rotation means (8a) or the manual rotation means (8b), causes a vertical displacement of the frame (6), moving the platform (5) vertically upwards to raise the piece of ham (100) resting on the platform (5) to the desired position. The horizontal platform (5) vertical displacement distance will correspond to the thickness of the ham slice to be cut.

The device (1) further comprises a distance limiting system (10) between the first plate (2a) and the second plate (2b). This system (10) allows adjusting the distance between the first plate (2a) and the second plate (2b) in order to adjust the device (1) to pieces of ham of different thicknesses. The distance limiting system (10) basically comprises a lever arm (10a) and a fixing rod (10c). The lever arm (10a) has one end hingedly fixed to the first plate (2a) and an opposite end having parallel projections (10b), for example, projections similar to the teeth of a comb. The fixing rod (10c) is rigidly fixed to the second plate (2b). In this way, a certain spacing distance between the first plate (2a) and the second plate (2b) can be set and then the lever arm (10a) is rotated around the first end until the fixing rod (10c) is engaged between two adjacent parallel projections (10b). The fixing rod (10c) can be screwed to the second plate (2b), so that it can be pressed against said plate (2b) until firmly immobilizing the two adjacent parallel projections (10b) between which it is located.

In another preferred embodiment of the device (1), the threaded vertical rotation means (8) can be replicated in the same part of the device, forming two or more synchronized rotation means, if it is required more than one means of rotation due to a greater dimension of the device (for example, for cutting large pieces of ham).

## Claims

1. Clamping and guide device (1) for cutting ham, **characterized in that** it comprises:
- first and second parallel vertical plates (2a, 2b) slidingly connected through horizontal guides (3), said first and second plates (2a, 2b) comprising a straight and smooth upper edge to allow the guidance of a knife;
- clamping means (4) that pushes the second vertical plate (2b) against the first vertical plate (2a) to hold a piece of ham (100) arranged between them;
- a vertically arranged horizontal platform (5) movable between the first plate (2a) and the second plate (2b) to provide lower support for the piece of ham (100) so that it protrudes above the upper edge of the plates (2a, 2b), where the horizontal platform (5) is connected to a vertically sliding frame (6) that is engaged with a threaded vertical rod (7); and
- a vertical threaded rod (7) rotation means (8), so that the rotation of said vertical threaded rod (7) causes the elevation of the horizontal platform (5) and the piece of ham (100) as it is cut.

2. The device (1) according to claim 1, wherein the clamping means (4) comprises a spring (41) having a first end (41a) fixed to a lever arm (42) rotating around an axis (43) horizontally fixed to the first plate (2a), and a second end (41 b) fixed to the second plate (2b) so that in a close position of the clamping means (4), where the lever arm (42) has a closing orientation, the spring (41) exerts a force tending to bring the first plate (2a) and the second plate (2b) closer together, compressing the piece of ham (100) between them, while in an opening position of the clamping means (4) where the lever arm (42) has an opening orientation, the spring (41) does not exert any force on the first plate (2a) or the second plate (2b), allowing their separation.

3. The device (1) according to claim 2, wherein the second end (41 b) of the spring (41) is fixed to the second plate (2b) through a threaded rod (44) to said second plate (2b) that allows the spring (41) to be tensioned and released.

4. The device (1) according to any of the preceding claims, wherein the frame (6) slides along two vertical guides (61) and is connected to the horizontal platform (5) through horizontal arms (62) that pass through vertical slots (63) of the first vertical plate (2a).

5. The device (1) according to any of the preceding claims, wherein the vertical threaded rod (7) rotating means (8) comprises an electrical mechanism (8a) that causes the automatic rotation of said vertical threaded rod (7) when a button is operated.

6. The device (1) according to any of the preceding claims, wherein the vertical threaded rod (7) rotating means (8) further comprises a manual mechanism (8b) comprising a lever fixed to a ratchet mechanism, so that when the lever is operated in a certain direction, a threaded vertical rod ratchet wheel is meshed in such a way that it causes the rotation of said threaded vertical rod in a direction that causes the horizontal platform to rise, thus raising said platform a small distance, then returning the lever to its original position when moving in the opposite direction, although in this case without engaging the ratchet of the threaded vertical rod and, therefore, without causing the horizontal platform to rise or fall.

7. The device (1) according to any of the preceding claims, further comprising a distance limiting system (10) that establishes a minimum approach distance between the first plate (2a) and the second plate (2b).

8. The device (1) according to claim 7, wherein the distance limiting system (10) comprises a rotating arm (10a) provided with several parallel projections (10b) arranged at its free end that is fixed to the first plate (2a) and a rod (10c) protruding from the second plate (2b), so that to adjust the distance between the first plate (2a) and the second plate (2b) the rod (10c) is inserted into a separation cavity between a determined pair of parallel projections (10b) of the arm (10a).

9. The device (1) according to any of the preceding claims, wherein the threaded vertical rotation means (8) (7) can be replicated in the same part of the device, defining two or more synchronized rotation means.

10. The device (1) according to any of the preceding claims, wherein the first or second plate (2a, 2b), or both, are configured in a semi-rigid grid, mesh, or network structure.
